# EUROPÄISCHE PATENTSCHRIFT

(11) **EP 0 537 230 B1**
(45) Veröffentlichungstag und Bekanntmachung des Hinweises auf die Patenterteilung: **18.05.1994**
(21) Anmeldenummer: 91912229.1
(22) Anmeldetag: 01.07.1991
(51) Int. Cl.: B01D 29/41, B01D 29/70, B01D 29/74, B01D 29/96

(54) **FLÜSSIGKEITSFILTER MIT EINEM DRUCKBEHÄLTER UND EINEM DARAN ANGEORDNETEN, VON EINER VERTIKALEN FILTERPAKETWELLE ANTREIBBAREN FILTERPAKET**
FILTER FOR LIQUIDS WITH A PRESSURIZED CONTAINER AND A FILTERING CARTRIDGE DRIVEN BY A VERTICAL SHAFT
FILTRE POUR LIQUIDES AVEC UN RECIPIENT SOUS PRESSION ET UNE CARTOUCHE FILTRANTE ENTRAINEE PAR UN ARBRE VERTICAL

(30) Priorität: 05.07.1990 DE 4021371
(43) Veröffentlichungstag der Anmeldung: 21.04.1993
(73) Patentinhaber: NEFF, Frank, D-55276 Oppenheim (DE)
(72) Erfinder: NEFF, Frank, D-55276 Oppenheim (DE)
(74) Vertreter: Bardehle, Heinz, Dipl.-Ing.
(86) Internationale Anmeldenummer: EP9101228
(87) Internationale Veröffentlichungsnummer: WO9200791

(56) Entgegenhaltungen:
- DE-A- 1 270 006
- DE-A- 2 902 444
- DE-A- 3 409 116

## Beschreibung

Die Erfindung bezieht sich auf einen Flüssigkeitsfilter nach dem Oberbegriff des Anspruchs 1.

Ein derartiger Flüssigkeitsfiter ist aus der DE-A-34 09 116 bekannt. Bei diesem Flüssigkeitsfilter wird die zu filternde Flüssigkeit über eine auf den Druckbehälter aufgesetzte, glockenartige Kammer zugeführt, die sich nach unten hin in den Innenraum des Druckbehälters öffnet. Die Kammer wird von der Filterpaketwelle durchsetzt und trägt an ihrem aus der Kammer herausragenden Ende den Antrieb für die Filterpaketwelle. Die gefilterte Flüssigkeit gelangt in die als Rohr ausgebildete Filterpaketwelle über radiale Öffnungen und wird am unteren Ende der Filterpaketwelle, die aus dem Druckbehälter herausragt, über einen Ableitungsstutzen abgeleitet. Der Druckbehälter wird nach unten hin durch eine Bodenplatte abgeschlossen, die mit ihrem Rand auf einem nach innen konisch verlaufenden unteren Wandteil des Druckbehälter über ein Boden-Auflagedichtung dichtend aufliegt. Zur Reinigung des Filters wird nach Absperrung der Zufuhr von zu filternder Flüssigkeit und vollständiger Leerung des Flüssigkeitsfilters die Bodenplatte angehoben, die zu diesem Zweck auf der Filterpaketwelle verschiebbar gelagert ist. Damit wird der Druckbehälter nach unten hin geöffnet, woraufhin durch Einleiten einer Waschflüssigkeit in den Druckbehälter und Antrieb der Filterpaketwelle der Druckbehälter und das Filterpaket gereinigt werden. Die Waschflüssigkeit mit den Filtrationsrückständen wird dann nach unten hin aus dem durch die angehobene Bodenplatte geöffneten Druckbehälter ausgeschwemmt.

Beim Antrieb der Filterpaketwelle wird diese in Rotation versetzt, und zwar üblicherweise mit einer Drehzahl von etwa 400 bis 500 Umdrehung/Minute. Da der Druckbehälter während des Filtervorganges unter Druck steht (z. B. 6 bis 16 bar), muß die Filterpaketwelle an den Stellen, an der sie den Druckbehälter und die glockenartige Kammer durchdringt, so abgedichtet werden, daß das dabei verwendete Dichtungssystem einerseits den Druck und andererseits auch die Belastung aufgrund der Reibung während der Rotation der Filterpaketwelle beim Reinigungsvorgang aushält. Hierzu sind teure und erheblichem Verschleiß ausgesetzte Drehdichtungen erforderlich.

Der Erfindung liegt die Aufgabe zugrunde, dieses Abdichtungsproblem zu beseitigen. Erfindungsgemäß geschieht dies durch die kennzeichnenden Merkmale des Patentanspruches 1.

Aufgrund der axialen Verschiebbarkeit der Filterpaketwelle ergibt sich die Möglichkeit, mit dieser sowohl die Bodenplatte als auch den Deckel im Oberteil des Druckbehälters zu verschieben und damit die jeweilige Auflagedichtung abzuheben, so daß diese bei der Rotation der Filterpaketwelle während der Filterreinigung nicht auf Reibung belastet ist. Sowohl die Bodenplatte als auch der Deckel können sich bei der Rotation der Filterpaketwelle frei und ohne Reibung gegenüber der jeweiligen Auflagedichtung drehen.

Während des Filtervorganges ist die Filterpaketwelle abgesenkt, wobei sowohl die Boden-Auflagedichtung als auch die Deckel-Auflagedichtung geschlossen sind. Um nun Toleranzen hinsichtlich des Abstandes zwischen Deckel und Bodenplatte einerseits und der jeweiligen Lage der Deckel-Auflagedichtung und der Boden-Auflagedichtung andererseits in einfacher Weise berücksichtigen zu können, gestaltet man die Anordnung zweckmäßig so, daß eine der Auflagedichtungen derart mit axialem Spiel betätigbar ist, daß diese Auflagedichtung beim Absenken der Filterpaketwelle verzögert schließt.

Aufgrund dieses axialen Spiels der einen Auflagedichtung werden diese Ungenauigkeiten hinsichtlich des Abstandes zwischen Deckel und Bodenplatte einerseits und der betreffenden Auflagedichtungen andererseits ausgeglichen. Ein beispielsweise aufgrund von Erhitzung sich gegenüber der Filterpaketwelle geringfügig ausdehnender Druckbehälter führt dann nicht zu einer unvollkommenen Schließung einer der Auflagedichtungen, da die betreffende mit Spiel betätigbare Auflagedichtung einer derartigen Ausdehnung folgen kann. Bei Aufliegen der betreffenden anderen Auflagedichtung gleicht so das Spiel der ersteren Auflagedichtung Ungenauigkeit aus, wobei auch die erstere Auflagedichtung in gewünschter Weise geschlossen gehalten wird.

Eine vorteilhafte Konstruktion zur Realisierung des vorstehend erläuterten Prinzips ergibt sich dadurch, daß der Deckel axial verschiebbar auf der Filterpaketwelle angeordnet und mittels einer Schraubenfeder gegen die Deckel-Auflagedichtung gedrückt wird und ein Anschlag zum Abheben des Deckels von der Deckel-Auflagedichtung an der Filterpaketwelle derart mit Abstand vom Deckel angeordnet ist, daß beim Absenken der Filterpaketwelle zunächst die Deckel-Auflagedichtung und danach die Boden-Auflagedichtung schließt.

Das axiale Spiel ist in diesem Falle für die Deckel-Auflagedichtung vorgesehen, da der Deckel von einem auf der Filterpaketwelle angeordneten Anschlag mitgenommen wird, und zwar derart, daß die Deckel-Auflagedichtung so lange geschlossen bleibt, wie der Anschlag sich über den erwähnten Abstand bewegt. Dabei ist dann die Boden-Auflagedichtung bereits geöffnet. Beim Absenken der Filterpaketwelle erfolgt dann zunächst das Schließen der Deckel-Auflagedichtung, die sich daraufhin aufgrund ihres axialen Spiels gegenüber der sich weiterhin absenkenden Filterpaketwelle verschiebt, wobei aber aufgrund der Federvorspannung der Deckel gegen die Deckel-Auflagedichtung gedrückt wird, bis schließlich auch die Boden-Auflagedichtung schließt.

Zweckmäßig erfolgt die Ausleitung der gefilterten Flüssigkeit aus dem Innenraum des Druckbehälters durch einen von der Filterpaketwelle getragenen Axialkanal.

Um dabei keine Drehdichtungen verwenden zu müssen, kann man in verschiedener Weise vorgehen.

Es ist möglich, das Prinzip der Verwendung von Auflagedichtungen dann anzuwenden, wenn die Filterpaketwelle selbst in ihrem unteren Bereich zur Ausleitung der gefilterten Flüssigkeit dient. In diesem Falle, in dem also die Filterpaketwelle mindestens in ihrem unteren Bereich als Rohr ausgebildet ist, das mit dem Axialkanal in Verbindung steht, endet die Filterpaketwelle zweckmäßig in einer Wellen-Auflagedichtung, die bei abgesenkter Filterpaketwelle gegenüber einem Ausleitungsstutzen abdichtend schließt, der in dieser Betriebslage an die Filterpaketwelle anschließt.

Wenn bei dieser Ausführungsform die Filterpaketwelle angehoben wird, dann öffnet auch die Wellen-Auflagedichtung, da in dieser Betriebslage eine durchgehende Abdichtung von rohrartiger Filterpaketwelle und Ableitungsstutzen nicht erforderlich ist. Es kann dann das Filterpaket durch Antrieb der Filterpaketwelle in Rotation versetzt werden, wobei aufgrund der Öffnung der Wellen-Auflagedichtung an dieser keine Reibung entstehen kann.

Es ist weiterhin möglich, den Axialkanal bei abgesenkter Filterpaketwelle über einen axialen Durchbruch in der Bodenplatte mit einem die Filterpaketwelle umschließenden Ringtopf zu verbinden, dessen der Bodenplatte zugewandte Wandkanten bei abgesenkter Filterpaketwelle über Wandauflagedichtungen an der Bodenplatte abdichtend anliegen. Hierdurch läßt sich die Bauhöhe verringern.

Um größere Filterleistungen zu ermöglichen, gestaltet man die Anordnung zweckmäßig so, daß unterhalb der Bodenplatte mit Abstand parallel zu dieser eine Abschlußplatte an der Filterpaketwelle befestigt ist, die ebenfalls mit ihrem Rand auf den unteren Wandteil des Druckbehälters über eine weitere Abschluß-Auflagedichtung aufliegt und die mit der Bodenplatte einen mit dem Axialkanal in Verbindung stehenden, scheibenförmigen Raum einschließt, der bei aufliegender Bodenplatte und Abschlußplatte zur Ausleitung der gefilteren Flüssigkeit durch den unteren Wandteil des Druckbehälters mit dem Axialkanal in Verbindung steht.

Aufgrund dieser Führung der gefilterten Flüssigkeit läßt sich erreichen, daß zu ihrer Ableitung die Filterpaketwelle nicht benötigt wird, so daß sie also auch an keinen Ableitungsstutzen anzuschließen ist. Damit entfällt eine Drehdichtung zwischen Filterpaketwelle und Ableitungsstutzen gänzlich. Bei am unteren Wandteil des Druckbehälters anliegender Bodenplatte und anliegender Abschlußplatte läßt sich die von dem scheibenförmigen Raum zwischen Bodenplatte und Abschlußplatte geleitete Flüssigkeit zu einer Öffnung in dem unteren Wandteil des Druckbehälters führen, wobei diese Öffnung in der Höhe des scheibenförmigen Raumes liegt. Die gefilterte Flüssigkeit kann also aus dem Druckbehälter in den mit diesem in Verbindung stehenden scheibenförmigen Raum und aus diesem durch die genannte Öffnung aus dem Druckbehälter heraus gelangen, ohne daß dabei die Filterpaketwelle zur Führung der gefilterten Flüssigkeit notwendig ist.

In den Figuren sind Ausführungsbeispiele der Erfindung dargestellt.

Es zeigen:
- Figur 1: eine Ausführungsform, bei der die gefilterte Flüssigkeit durch eine in ihrem unteren Bereich als Rohr ausgebildete Filterpaketwelle ausgeleitet wird, und zwar im geschlossenen Zustand des Druckbehälters;
- Figur 2: den gleichen Flüssigkeitfilter bei geöffnetem Druckbehälter;
- Figur 3: einen Flüssigkeitsbehälter mit Ausleitung der gefilterten Flüssigkeiten durch einen Ringtopf unterhalb der Bodenplatte;
- Figur 4: den gleichen Flüssigkeitsfilter bei geöffnetem Druckbehälter;
- Figur 5: einen Flüssigkeitsfilter mit Ausleitung der gefilterten Flüssigkeit über einen scheibenförmigen Raum zwischen Bodenplatte und Abschlußplatte, und zwar in geschlossenem Zustand des Druckbehälters,
- Figur 6: den gleichen Flüssigkeitsfilter, wie in Figur 5 dargestellt, bei geöffnetem Druckbehälter,
- Figur 7: einen Ausschnitt aus Figur 5 im Bereich der Boden-Auflagedichtung.

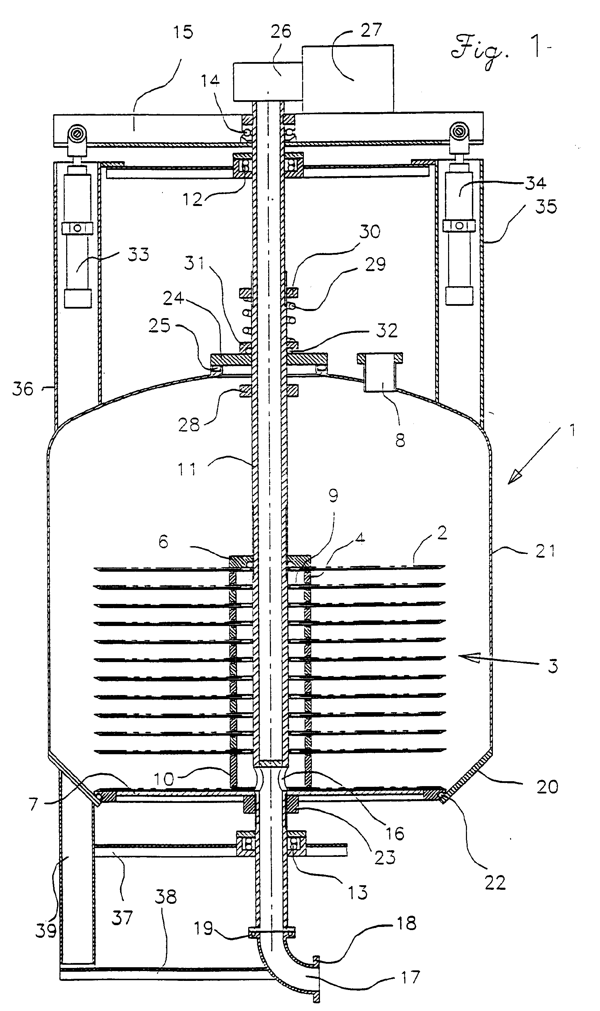

Der in Figur 1 dargestellte Flüssigkeitfilter besteht aus dem Druckbehälter 1, in dem das aus übereinander angeordneten Filterelementen 2 aufgebaute Filterpaket 3 angeordnet ist. Die einzelnen Filterelemente 2 sind durch Teller gebildet, auf denen in bekannter Weise jeweils eine Schicht aus Kieselgur aufgeschwemmt ist. Die Filterelemente 2 sind voneinander durch hohlzylindrische Distanzstücke 4 voneinander getrennt. Die Distanzstücke 4 bilden in ihrer Gesamtheit einen Hohlzylinder 10, der sich als Axialkanal von einer Verschraubung 6 ab nach unten hin bis zu der Bodenplatte 7 erstreckt.

Die über den Einlaßstutzen 8 zugeführte, zu filternde Flüssigkeit gelangt in den Innenraum des Druckbehälters 1 und fließt dann über die Filterelemente 2 in Richtung auf den Hohlzylinder 10, wobei die die einzelnen Distanzstücke 4 radial nach innen jeweils durchsetzenden Filterelemente 2 in ihrem Inneren in bekannter Weise die zu filternde Flüssigkeit in den Innenraum des Hohlzylinders 10 transportieren. Die Bereiche der Filterelemente 2 innerhalb des Hohlzylinders 10 besitzen in axialer Richtung Durchlässe 9, so daß sich gefilterte Flüssigkeit von jedem Filterelement 2 her im Hohlzylinder (10) durch die Durchläße 9 in Richtung auf das untere Ende des Hohlzylinders 10 bewegen kann.

Das Filterpaket 3 mit dem Hohlzylinder 10 wird von der Filterpaketwelle 11 getragen, die hier als Rohr ausgebildet ist. Die Filterpaketwelle 11, die, wie später erläutert, zur Filterreinigung in Rotation versetzt wird, ist im Bereich ihres oberen Endes in dem Radiallager 12 und im Bereich ihres unteren Endes in dem Radiallager 13 axial verschiebbar gelagert, die beide jeweils die Rotation der Filterpaketwelle 11 ermöglichen. In axialer Richtung wird die Filterpaketwelle 11 durch das Axiallager 14 getragen, das in einer Traverse 15 angebracht ist, auf deren Funktion weiter unten näher eingegangen wird.

Die Filterpaketwelle 11 besitzt im Bereich des unteren Distanzstückes des Hohlzylinders 10 die radial verlaufenden Durchbrüche 16, über die im Hohlzylinder 10 nach unten hin fließende gefilterte Flüssigkeit in den Innenraum der Filterpaketwelle eintritt. Die gefilterte Flüssigkeit wird so bis zum unteren Ende der Filterpaketwelle 11 geführt und gelangt schließlich in den Ausleitungsstutzen 17, der über den Flansch 18 in hier nicht interessierender Weise an eine fortführende Leitung angeschlossen ist

Die Verbindung zwischen dem unteren Ende der Filterpaketwelle 11 und dem Ausleitungsstutzen 17 erfolgt hier über die Wellen-Auflagedichtung 19, auf deren Funktion weiter unten näher eingegangen wird.

Der Abschluß des Druckbehälters 1 nach unten hin erfolgt bei dem dargestellten Ausführungsbeispiel durch die Bodenplatte 7, die mit ihrem Rand auf dem unteren Wandteil 20 aufliegt, in dem die zylindrische Außenwand 21 des Druckbehälters ausläuft. Das untere Wandteil 20 verläuft nach innen zu nach Art eines Konus, so daß die Bodenplatte 7 mit ihrem Rand eine durch diesen Konus definierte Auflagestelle erhält. Die Auflagestelle wird hier durch die Boden-Auflagedichtung 22 gebildet, durch die der Druckbehälter 1 nach unten hin dichtend abgeschlossen wird. Die Bodenplatte 7 ist an der Filterpaketwelle 11 befestigt, und zwar mittels der dichtenden Verschraubung 23.

Nach oben hin ist der Druckbehälter 1 durch den Deckel 24 abgeschlossen, der in der in Figur 1 dargestellten Betriebslage dichtend auf der Deckel-Auflagedichtung 25 aufliegt. In der dargestellten Betriebslage kann daher über den Einlaßstutzen 8 unter Druck stehende, zu filternde Flüssigkeit durch den Druckbehälter 1 hindurch gedrückt werden, bis die gefilterte Flüssigkeit schließlich am Ausleitungsstutzen 17 austritt. Der Deckel 24 ist axial verschiebbar auf der Filterpaketwelle 11 gelagert.

Wie ersichtlich, sind im Bereich des Druckbehälters 1 zwei Auflagedichtungen vorgesehen, nämlich beim Deckel 24 die Deckel-Auflagedichtung 25 und bei der Bodenplatte 7 die Boden-Auflagedichtung 22. Diese beiden Auflagedichtungen ermöglichen es nun, bei Rotation des Filterpaktes 3 eine Reibbelastung von diesen Dichtungen auszuschließen.

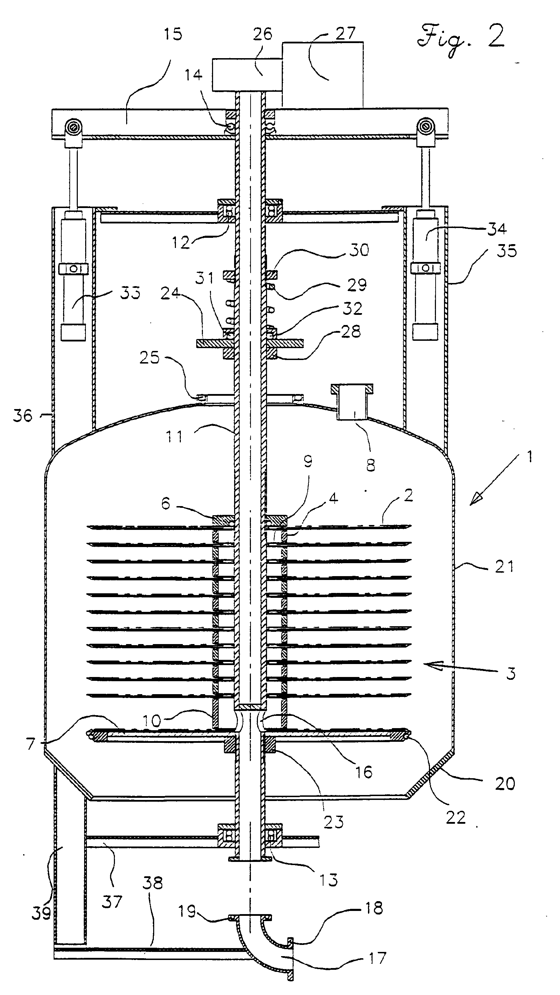

Die Rotation des Filterpaketes 3 erfolgt in üblicher und bekannter Weise zur Reinigung des Filters, wozu am oberen Ende der Filterpaketwelle 11 das Getriebe 26 und der Antriebsmotor 27 angeordnet sind. Der Antriebsmotor 27 wird von der oben bereits erwähnten Traverse 15 mit getragen. Um nun eine Reibbelastung von den Auflagedichtungen 25 und 22 bei der Rotation der Filterpaketwelle 11 fernzuhalten, wird die Filterpaketwelle aus der in Figur 1 dargestellten Betriebslage für das Filtern in axialer Richtung nach oben verschoben, bis sie die in der Figur 2 dargestellte Reinigungspositon annimmt (hierauf wird später noch eingegangen). Aufgrund dieser axialen Verschiebung der Filterpaketwelle 11 wird direkt die Bodenplatte 7 angehoben, womit die Boden-Auflagedichtung abhebt und den Innenraum des Druckbehälters 1 nach außen hin öffnet. Mit der axialen Verschiebung der Filterpaketwelle 11 nach oben hin wird auch der auf der Filterpaketwelle 11 befestigte Anschlag 28 mitgenommen, der sich in der in Figur 1 dargestellten Betriebslage zunächst in Abstand von dem Deckel 24 befindet, so daß also bei der Anhebung der Filterpaketwelle 11 zunächst die Boden-Auflagedichtung 22 öffnet Nach Durchlaufen des aus Figur 1 ersichtlichen Abstandes zwischen dem Anschlag 28 und dem Deckel 24 wird auch der Deckel 24 mit weiterer axialer Verschiebung der Filterpaketwelle 11 mitgenommen, wobei auch die Deckel-Auflagedichtung 25 öffnet. Es befinden sich dann beide Auflagedichtungen in abgehobenem Zustand, so daß bei daraufhin erfolgender Rotation der Filterpaketwelle 11 die beiden Dichtungen nicht auf Reibung beansprucht werden.

Der Abstand zwischen dem Anschlag 28 und dem Deckel 24 ist hier darum vorgesehen, damit mögliche Toleranzen, Fabrikationsungenauigkeiten oder Längenveränderungen aufgrund von Temperaturschwankungen ausgeglichen werden können, die sonst unter Umständen zu einer nicht gleichmäßigen Abdichtung durch die beiden Auflagedichtungen 25 und 22 führen könnten. Dabei steht der Deckel 24 aufgrund der Schraubenfeder 29 unter Federspannung. Die Schraubenfeder 29 stützt sich einerseits an dem auf der Filterpaketwelle 11 befestigten Stellring 30 ab, sie drückt andererseits gegen das Schulterstück 31, das seinerseits auf den darunter angeordneten, als Dichtung wirkenden O-Ring 32 drückt, der dafür sorgt, daß zwischen dem Deckel 24 und der Filterpaketwelle 11 eine Abdichtung besteht. Aufgrund der beschriebenen Federvorspannung des Deckels 24 drückt dieser so lange auf die Deckel-Auflagedichtung 25, wie der Anschlag 24 sich noch in Abstand zum Deckel 24 befindet.

Die axiale Verschiebung der Filterpaketwelle 11 erfolgt hier durch eine entsprechende Bewegung der Traverse 15. Die Traverse 15 stützt sich auf die beiden Hub-Zylinder-Einheiten 33 und 34, die bei ihrer in bekannter Weise erfolgten Betätigung die Traverse 15 aus der in Figur 1 dargestellten Betriebslage in die in Figur 2 dargestellte Reinigungsposition anheben. Dabei wird über das Axiallager 14 die Filterpaketwelle 11 entsprechend mitgenommen, außerdem auch das Getriebe 26 und der Antriebsmotor 27. Die Filterpaketwelle 11 kann dabei in den Radiallagern 12 und 13 axial gleiten, ohne daß sich dabei an ihrer Zentrierung gegenüber dem Druckbehälter 1 etwas ändert.

Die beiden Hub-Zylinder-Einheiten 33 und 34 sind in Stützen 35 und 36 angebracht, die auf dem oberen Bereich des Druckbehälters 1 ruhen und an diesem angeschweißt sind.

Das Radiallager 13 und der Ausleitungsstutzen 17 sind jeweils über Träger 37 und 38 an der am Druckbehälter 1 befestigen Stütze 39 angebracht.

Damit auch im Bereich des Ausleitungsstutzen 17 gegenüber der beim Reinigen rotierenden Filterpaketwelle 11 keine Reibung in einer Dichtung entsteht, ist die bereits erwähnte Wellen-Auflagedichtung 19 vorgesehen.

Diese Wellen-Auflagedichtung 19 befindet sich zwischen dem unteren Ende der Filterpaketwelle 11 und dem Eingang des Ausleitungsstutzen 17, sie wird in der in Figur 1 dargestellten Betriebslage durch die beiden Bauteile zusammengedrückt und dichtet dementsprechend ab. Wenn die Filterpaketwelle 11 in Rotation versetzt wird, dann hatte diese vorher durch die Betätigung der beiden Hub-Zylinder-Einheiten 33 und 34 abgehoben, so daß sich also nicht nur bei der Boden-Auflagedichtung 22 und der Deckel-Auflagedichtung 25 ein Abstand ergibt, sondern auch bei der Wellen-Auflagedichtung 19, so daß also insgesamt bei Rotation der Filterpaterwelle 11 keine Dichtung exitiert, die dabei auf Drehung beansprucht wird.

Der hier in Rede stehende Typ von Flüssigkeitsfiltern bedarf normalerweise einer Reinigung, wozu der Flüssigkeitsfilter gegenüber weiterer Zufuhr von zu filternder Flüssigkeit abgesperrt und der Druckbehälter 1 gänzlich entleert wird. Es erfolgt daraufhin die vorstehend beschriebene Anhebung der Filterpaketwelle 11 mit der Öffnung der erwähnten Auflagedichtungen. Der Flüssigkeitsfilter nimmt dann die in der Figur 2 dargestellte Reinigungsposition ein. In dieser Positon wird dem Innenraum des Druckbehälters 1 in bekannter Weise eine Waschflüssigkeit, insbesondere Wasser zugeführt, und zwar üblicherweise über im Innenraum des Druckbehälters 1 angeordnete Spritzdüsen. Die Reinigungsflüssigkeit wäscht dann sowohl das auf den Filterelementen 2 aufgeschwemmte Kieselgur und die Filterrückstände aus. Aufgrund der Rotation des Filterpakets 3 werden dabei sowohl das Kieselgur als auch die Filtrationsrückstände abgeschleudert und fließen mit der Reinigungs- bzw. Waschflüssigkeit über das untere Wandteil 20 ab, wobei der Ablauf durch die von dem unteren Wandteil 20 abgehobene Bodenplatte 7 gewährleistet ist. Die Waschflüssigkeit, versetzt mit Kieselgur und Filtrationsrückständen, fließt dann üblicherweise in ein unter dem Flüssigkeitsfilter bereitstehendes Auffanggefäß.

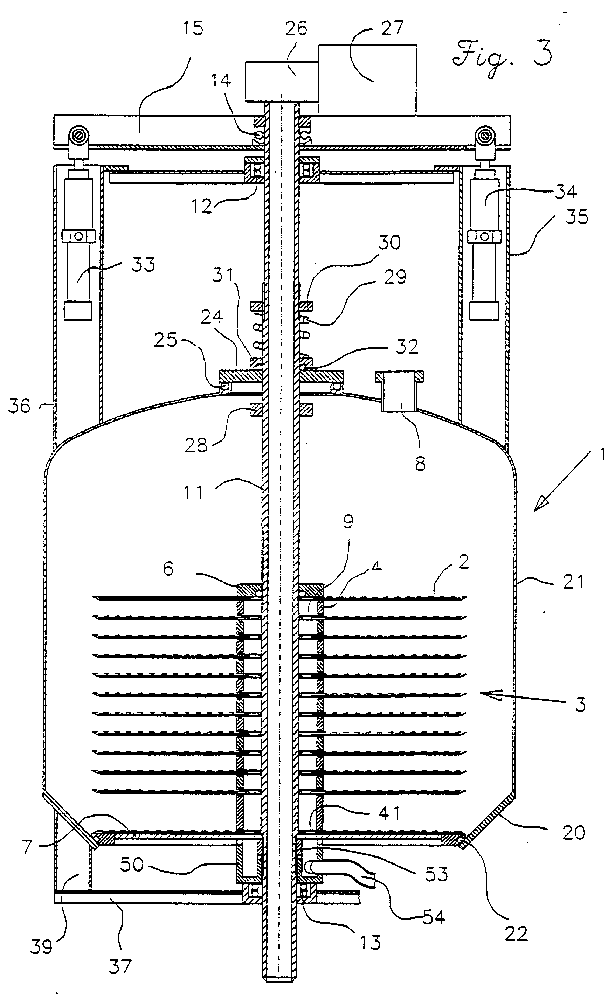

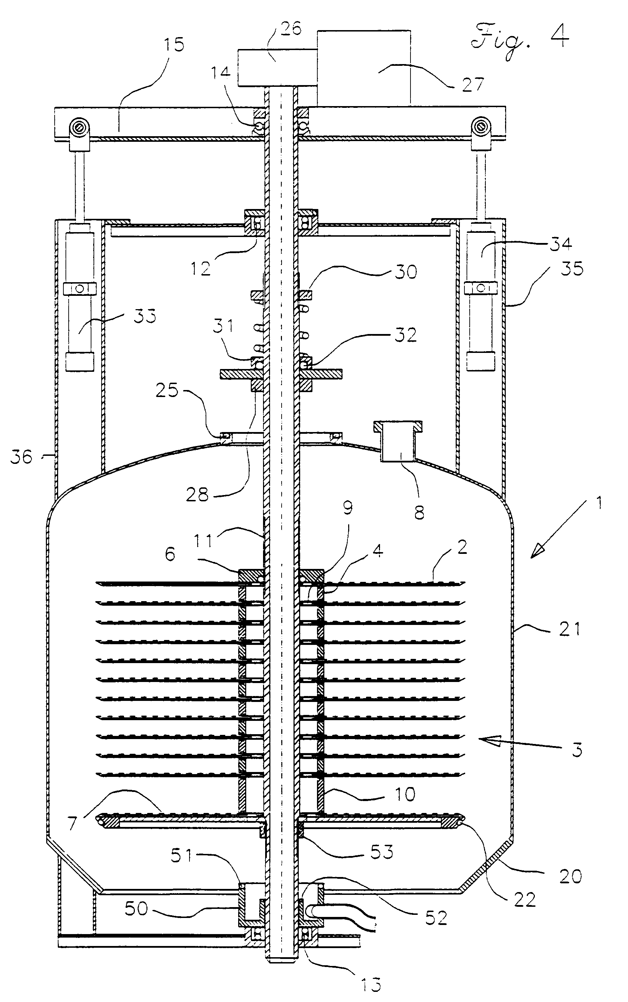

Bei dem in den Figuren 3 und 4 dargestellten Ausführungsbeispiel handelt es sich um eine Variante im Bereich der Ableitung von gefilterter Flüssigkeit unterhalb der Bodenplatte 7. Es wird also das gleiche Filterpaket 3, die gleiche Lagerung und Aufhängung der Filterpaketwelle 11 und die sonstigen oberhalb der Bodenplatte 7 angeordneten Bauteile verwendet, so daß diesbezüglich auf die Erläuterung zu den Figuren 1 und 2 verwiesen werden kann.

Zur Ableitung der gefilterten Flüssigkeit wird diese aus dem Hohlzylinder 5 durch die Durchbrüche 41 in der Bodenplatte 7 in dem unter dieser angeordneten Ringtopf 50 geleitet, der stationär und nicht drehbeweglich angeordnet ist. An diesen Ringtopf 50 ist der Ableitungsstutzen 54 angeschlossen, von dem dann die gefilterte Flüssigkeit in nicht dargestellter Weise weitergeleitet wird.

Die beiden ringartigen Topfränder des Ringtopfes 50 sind mit Wandauflagedichtungen 51,52 versehen, von denen die äußere Wandauflagedichtung direkt gegen die Bodenplatte 7 und die innere Wandauflagedichtung gegen die Verschraubung 53 drücken, wenn die Filterpaketwelle 11 sich in abgesenkter Lage, wie in Figur 3 dargestellt, befindet. Die Verschraubung 53 wirkt hier in gleicher Weise wie die in Figur 1 dargestellte Verschraubung 23. Die Filterpaketwelle 11 durchsetzt den Ringtopf 50 mit einem gewissen Spiel, so daß sich die Filterpaketwelle 11 bei ihrem Antrieb ungehindert gegenüber dem Ringtopf 50 drehen kann.

Beim Waschvorgang befindet sich, wie oben bereits dargestellt, die Bodenplatte 7 in einer angehobenen Lage, in der dann die Bodenplatte 7 von den Wandauflagedichtungen 51 und 52 abgehoben ist, so daß diese Dichtungen bei der Rotation der Filterpaketwelle 1 und der Bodenplatte 7 keiner Drehreibung ausgesetzt sind (siehe Figur 4).

Die Anordnung gemäß den Figuren 3 und 4 besitzt gegenüber der Anordnung gemäß den Figuren 1 und 2 den Vorteil einer geringeren Bauhöhe.

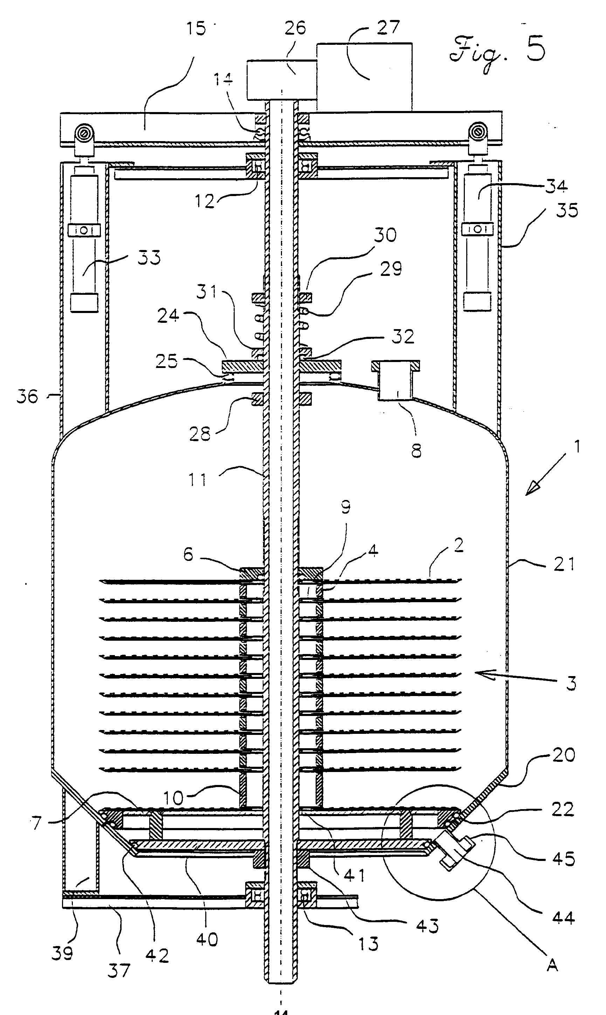

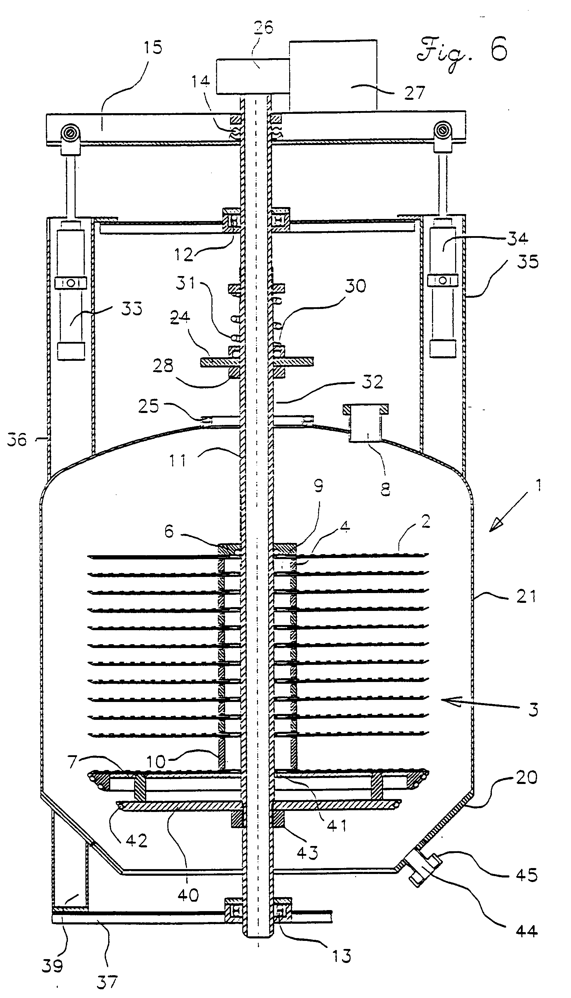

Bei dem in Figuren 5 und 6 dargestellten Ansführungsbeispiel handelt es sich hinsichtlich des eigentlichen Filters um die gleiche Anordnung, wie sie in den Figuren 1 und 2 dargestellt ist. Insbesondere wird das gleiche Filterpaket 3 und die gleiche Lagerung und Aufhängung der Filterpaketwelle 11 verwendet, so daß also diesbezüglich auf die Erläuterung zu den Figuren 1 und 2 verwiesen werden kann.

Die Ausführungsform gemäß den Figuren 5 und 6 unterscheidet sich von derjenigen gemäß den Figuren 1 und 2 dadurch, daß die Filterpaketwelle 11 in ihrem Innenraum nicht notwenigerweise zur Führung der gefilterten Flüssigkeit herangezogen werden muß. Dies erbringt den Vorteil, daß am unteren Ende der Filterpaketwelle 11 überhaupt keine Abdichtung erforderlich ist.

Zur Ableitung der gefilterten Flüssigkeit dient hier eine besondere Maßnahme, nämlich die Gestaltung eines scheibenartigen Raumes zwischen der Bodenplatte 7 und der Abschlußplatte 40. Der Raum zwischen diesen beiden Platten steht mit dem Innenraum des Druckbehälters 1 über axiale Durchbrüche 41 in der Bodenplatte 7 in Verbindung. Diese axialen Durchbrüche 41 haben zunächst Zugang zum Innenraum des Hohlzylinders 5, so daß also durch die Filterelemente 2 gefilterte Flüssigkeit aus dem Hohlzylinder 5 über die Durchbrüche 41 in den Raum zwischen Bodenplatte 7 und Abschlußplatte 40 gelangt. Dieser Raum wird nun einerseits durch die Boden-Auflagedichtung 22 und andererseits durch die Abschluß-Auflagedichtung 42 abgeschlossen. Die Abschlußplatte 40 ist ähnlich wie die Bodenplatte 7 über die Schraubverbindung 43 an der Filterpaketwelle 11 befestigt, so daß bei axialer Verschiebung der Filterpaketwelle 11 die Bodenplatte 7 und die Abschlußplatte 40 unter Aufrechterhaltung dieses Abstandes mitgenommen werden. Die Ableitung von gefilterter Flüssigkeit aus dem Raum zwischen Bodenplatte 7 und Abschlußplatte 40 erfolgt mittels des Ableitungsstutzes 44, der über die Verschraubung 45 an irgendeine weiterführende Leitung angeschlossen werden kann. Wie ersichtlich, liegt der Ableitungsstutzen 44 in Bezug auf den Druckbehälter 1 relativ hoch, jedenfalls im Vergleich zu dem Ausleitungsstutzen 17 gemäß dem Ausführungsbeispiel nach Figur 1. Dies stellt im Allgemeinen für die Benutzer derartiger Flüssigkeitsfilter einen wesentlichen Vorteil dar, da es bei diesen meist auf geringe Bauhöhe entscheidend ankommt.

Um bei dem Flüssigkeitsfilter gemäß Figur 5 den oben bereits erwähnten Reinigungs- bzw. Waschvorgang durchzuführen, wird, wie oben beschrieben, die Filterpaketwelle 11 axial nach oben verschoben, wobei die Bodenplatte 7 und die Abschlußplatte 40 in die in Figur 6 dargestellte Reinigungsposition gelangen, in der dann, wie oben bereits erläutert, durch eine Reinigungsflüssigkeit der Innenraum des Druckbehälters ausgewaschen werden kann. Dabei ist im Prinzip in gleicher Weise vorzugehen, wie oben im Zusammenhang mit der Figur 2 beschrieben worden ist. Dabei kann dann die Reinigungsflüssigkeit über das untere Wandteil 20 in einen Auffangbehälter abgeleitet werden. Wegen der bei dieser Ausführungsform zur Verfügung stehenden Querschnitte eignet sich diese besonders für große Filterleistungen.

Wie die Figur 6 deutlich zeigt, sind die bei dieser Ausführungsform verwendete Deckel-Auflagedichtung 25 im Bereich des Deckels 24 und die Boden-Auflagedichtung 22 sowie die Abschluß-Auflagedichtung 42 angehoben, so daß bei diesen Dichtungen bei Rotation der Filterpaketwelle 11 keine Reibung entstehen kann.

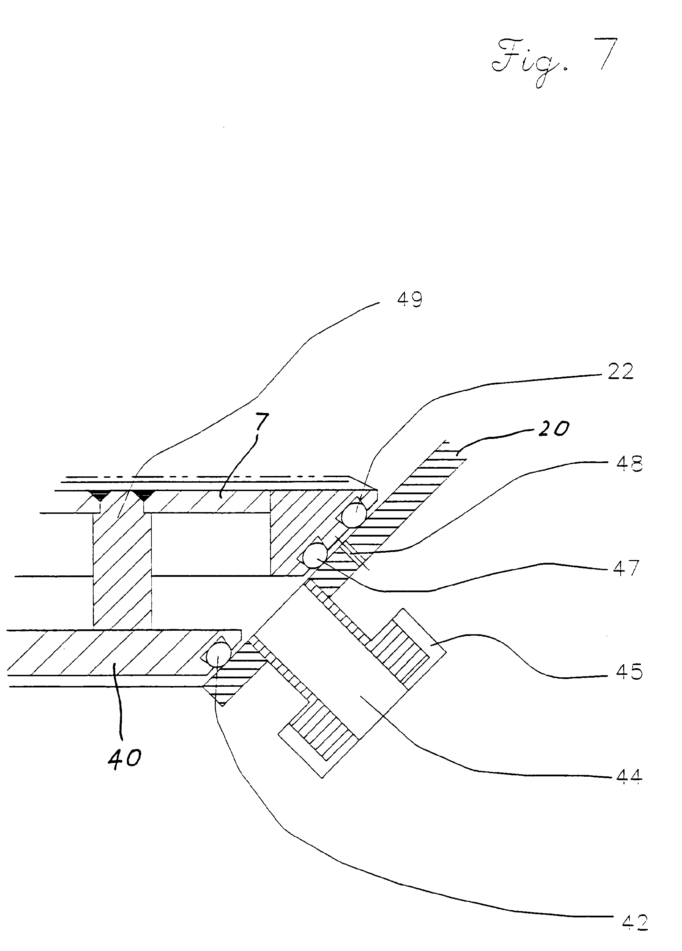

Gemäß dem in der Figur 7 dargestellten Ausschnitt aus der Figur 5 (siehe Kreis A in Figur 5) ist die als O-Ring ausgebildete Boden-Auflagedichtung 22 durch den O-Ring 47 ergänzt, um die Dichtigkeit an dieser Stelle zu verbessern. Damit nun eine mögliche Undichtigkeit eines der beiden O-Ringe 22 bzw. 47 nach außen hin sichtbar in Erscheinung treten kann, ist in das untere Wandteil 20 die Bohrung 48 eingebracht, die mit einem Durchmesser von ca. 1 bis 3 mm im Falle einer Undichtigkeit eines der beiden O-Ringe 22 bzw. 47 Flüssigkeit hindurchläßt. Wenn also aus der Bohrung 48 Flüssigkeit austritt, dann erkennt das Bedienungpersonal sofort, daß im Bereich der Boden-Auflagedichtung 22/47 eine Undichtigkeit vorliegt. An der Art der austretenden Flüssigkeit sieht man dann, welcher der beiden O-Ringe 22 bzw. 47 undicht ist. Handelt es sich um ungefilterte Flüssigkeit, so ist der O-Ring 22 undicht. Tritt gefilterte Flüssigkeit aus, so ist der O-Ring 47 undicht. Sind beide O-Ringe 22 bzw. 47 undicht, so wird ein Überfließen von ungefilterter Flüsssigkeit in den Bereich der gefilterten Flüssigkeit, also in den Bereich des Ableitungsstutzens 44, dadurch verhindert, daß, da auf den äußeren Seiten der beiden O-Ringe 22 und 47 Druck herrscht, im Bereich der Bohrung 48 aber nicht, die durch die Undichtigkeit hindurchfließende Flüssigkeit sofort über die Bohrung 48 abgeleitet wird.

Die Figur 7 zeigt noch die Abstützung der Bodenplatte 7 gegenüber der Abschlußplatte 40 bzw. umgekehrt, und zwar mittels des Stegs 49. Derartige Stege 49 sind rings verteilt um die Filterpaketwelle 11 mehrfach angeordnet, wodurch der Bodenplatte 7 und der Abschlußplatte 40 die erforderliche Stabilität gegeben wird.

## Patentansprüche

1. Flüssigkeitsfilter mit einem Druckbehälter (1) und einem darin angeordneten, von einer vertikalen Filterpaketwelle (11) antreibbaren Filterpaket (3), unter dem eine Bodenplatte (7) angeordnet ist, die mit ihrem Rand auf einem nach innen konisch verlaufenden unteren Wandteil (20) des Druckbehälters (1) über eine Boden-Auflagedichtung (22) abdichtend aufliegt, wobei zur Reinigung durch Anheben der Bodenplatte (7) und Öffnen der Boden-Auflagedichtung (22) der Druckbehälter (1) nach außen geöffnet und das Filterpaket (3) durch einen Antrieb (26, 27) der Filterpaketwelle (11) in Rotation versetzt wird, **dadurch gekennzeichnet,** daß die Filterpaketwelle (11) axial verschiebbar gelagert ist und an ihr die Bodenplatte (7) und im Bereich des Oberteils des Druckbehälters (1) ein Deckel (24) derart angebracht sind, daß mit axialem Anheben der Filterpaketwelle (11) der Deckel (24) des Druckbehälters (1) von diesem abhebt und dabei eine zwischen Deckel (24) und Druckbehälter (1) angeordnete Deckel-Auflagedichtung (25) öffnet und die Bodenplatte (7) zur Öffnung des Druckbehälters (1) mitnimmt.

2. Flüssigkeitsfilter nach Anspruch 1, **dadurch gekennzeichnet**, daß eine der Auflagedichtungen (22/25) derart mit axialem Spiel betätigbar ist, daß diese Auflagedichtung beim Absenken der Filterpaketwelle (11) verzögert schließt.

3. Flüssigkeitsfilter nach Anspruch 2, **dadurch gekennzeichnet,** daß der Deckel (24) axial verschiebbar auf der Filterpaketwelle (11) angeordnet ist und mittels einer Feder (29) gegen die Deckel-Auflagedichtung (25) gedrückt wird und ein Anschlag (28) zum Abheben des Deckels (24) von der Deckel-Auflagedichtung (25) an der Filterpaketwelle (11) derart mit Abstand vom Deckel (24) angeordnet ist, daß beim Absenken der Filterpaketwelle (11) zunächst die Deckel-Auflagedichtung (25) und danach die Boden-Auflagedichtung (22) schließt.

4. Flüssigkeitsfilter nach einem der Ansprüche 1 bis 3, **dadurch** **gekennzeichnet,** daß die Filterpaketwelle (11) einen Axialkanal (5) zur Ausleitung der gefilterten Flüssigkeit trägt.

5. Flüssigkeitsfilter nach Anspruch 4, **dadurch gekennzeichnet**, daß die Filterpaketwelle (11) mindestens in ihrem unteren Bereich als Rohr ausgebildet ist, das mit dem Axialkanal (5) in Verbindung steht, und daß die Filterpaketwelle (11) in einer Wellen-Auflagedichtung (19) endet, die bei abgesenkter Filterpaketwelle (11) gegenüber einem stationären Ausleitungsstutzen (17) abdichtend schließt, der in dieser Betriebslage an die Filterpaketwelle (11) anschließt.

6. Flüssigkeitsfilter nach Anspruch 4, **dadurch gekennzeichnet,** daß der Axialkanal (5) bei abgesenkter Filterpaketwelle (11) über einen axialen Durchbruch (41) in der Bodenplatte (7) mit einem die Filterpaketwelle (11) umschließenden Ringtopf (50) in Verbindung steht, dessen der Bodenplatte (7) zugewandte Wandkanten bei abgesenkter Filterpaketwelle (11) über Wandauflagedichtungen (51,52) an der Bodenplatte (7) abdichtend anliegen.

7. Flüssigkeitsfilter nach Anspruch 4, **dadurch gekennzeichnet,** daß unterhalb der Bodenplatte (7) mit Abstand und parallel zu dieser eine Abschlußplatte (40) an der Filterpaketwelle (11) befestigt ist, die ebenfalls mit ihrem Rand auf dem unteren Wandteil (20) des Druckbehälters (1) über eine weitere Abschuß-Auflagedichtung (42) aufliegt und die mit der Bodenplatte (7) einen mit dem Axialkanal (5) in Verbindung stehenden, scheibenförmigen Raum einschließt, der bei aufliegender Bodenplatte (7) und Abschlußplatte (40) zur Ausleitung der gefilterten Flüssigkeit durch den unteren Wandteil (20) des Druckbehälters (1) dient.

## Claims

1. Filter for liquids with a pressurised container (1) in which is arranged a filtering cartridge (3) that can be driven by a vertical shaft (11) and below which is arranged a bottom plate (7), the edge of the bottom plate resting on an inwardly tapering lower part (20) of the wall of the pressurised container (1) via a bottom sealing gasket (22), wherein, for cleaning, by lifting the bottom plate (7) and opening the bottom sealing gasket (22), the pressurised container (1) is opened outwardly and the filtering cartridge (3) is rotated by a drive (26, 27) of the filtering cartridge shaft (11), characterised in that the filtering cartridge shaft (11) is axially movable and carries the bottom plate (7) and a lid (24) arranged in the region of the top part of the pressurised container (1), so that when the filtering cartridge shaft (11) is axially lifted, the lid (24) is lifted from the pressurised container (1), a lid sealing gasket (25) arranged between the lid (24) and the pressurised container (1) is opened and the bottom plate (7) is entrained, opening the pressurised container (1).

2. Filter for liquids according to claim 1, characterised in that one of the sealing gaskets (22/25) can be actuated with axial play so that this sealing gasket is closed in a delayed manner when the filtering cartridge shaft (11) is lowered.

3. Filter for liquids according to claim 2, characterised in that the lid (24) is arranged in an axially movable manner on the filtering cartridge shaft (11) and is pressed against the lid sealing gasket (25) by means of a spring (29) and a stop (28) for lifting the lid (24) from the lid sealing gasket (25) is arranged on the filtering cartridge shaft (11) at a distance from the lid (24) so that first the lid sealing gasket (25) and then the bottom sealing gasket (22) is closed when the filtering cartridge shaft (11) is lowered.

4. Filter for liquids according to one of claims 1 to 3, characterised in that the filtering cartridge shaft (11) carries an axial channel (5) for the discharge of the filtered liquid.

5. Filter for liquids according to claim 4, characterised in that the filtering cartridge shaft (11) is designed at least in its lower region as a pipe which is connected to the axial channel (5) and that the filtering cartridge shaft (11) ends in a shaft sealing gasket (19) which provides sealing with respect to a stationary discharge connection (17) when the filtering cartridge shaft (11) is lowered, said discharge connection being connected to the filtering cartridge shaft (11) in this operating position.

6. Filter for liquids according to claim 4, characterised in that the axial channel (5) is connected via an axial opening (41) in the bottom plate (7) to an annular pot (50) surrounding the filtering cartridge shaft (11) when the filtering cartridge shaft (11) is lowered, the wall edges of said annular pot facing the bottom plate (7) resting on the bottom plate (7) via wall sealing gaskets (51, 52) when the filtering cartridge shaft (11) is lowered.

7. Filter for liquids according to claim 4, characterised in that a closing plate (40) is secured to- the filtering cartridge shaft (11) below the bottom plate (7) at a distance from and parallel to the latter, the edge of said closing plate also resting on the lower part (20) of the wall of the pressurised container (1) via a further closing plate sealing gasket (42) and the closing plate and the bottom plate (7) together enclosing a disc-shaped space which is connected to the axial channel (5) and serves for the discharge of the filtered liquid through the lower part (20) of the wall of the pressurised container (1) when the bottom plate (7) and the closing plate (40) rest against one another.

## Revendications

1. Filtre pour liquides comportant un réservoir sous pression (1) et une cartouche de filtre (3) montée dans celui-ci et pouvant être entraînée par un arbre (11) de cartouche de filtre vertical, sous laquelle est montée une plaque de fond (7), dont le bord repose manière étanche, par l'intermédiaire d'un dispositif (22) d'étanchéité d'appui de fond, sur une partie inférieure de paroi (20) du réservoir sous pression (1), s'étendant en formant un cône vers l'intérieur, le réservoir sous pression (1) étant ouvert vers l'extérieur, en soulevant la plaque de fond (7) et en ouvrant le dispositif (22) d'étanchéité d'appui du fond, et la cartouche de filtre (3) étant actionnée en rotation par un mécanisme d'entraînement (26, 27) de l'arbre (11) de cartouche de filtre, à des fins de nettoyage, caractérisé en ce que l'arbre (11) de cartouche de filtre est supporté en étant capable de déplacement dans le sens axial et en ce que la plaque de fond (7) et, dans le secteur de la partie supérieure du réservoir sous pression (1), un couvercle (24), sont montés sur ledit arbre, de manière telle que lorsque l'on soulève l'arbre (11) de cartouche de filtre dans le sens axial, le couvercle (24) du réservoir sous pression (1) se soulève de celui-ci et un dispositif (25) d'étanchéité d'appui du couvercle, disposé entre le couvercle (24) et le réservoir sous pression (1) s'ouvre et entraîne la plaque de fond (7), afin d'ouvrir le réservoir sous pression (1).

2. Filtre pour liquides selon la revendication 1, caractérisé en ce que l'un des dispositif s (22/25) d'étanchéité d'appui peut être actionné selon un jeu axial tel, que ce dispositif d'étanchéité d'appui se ferme à retardement lors de l'abaissement de l'arbre (11) de cartouche de filtre.

3. Filtre pour liquides selon la revendication 2, caractérisé en ce que le couvercle (24) est disposé en étant capable de déplacement dans le sens axial sur l'arbre (11) de cartouche de filtre et est pressé au moyen d'un ressort (29) contre le dispositif (25) d'étanchéité d'appui du couvercle et en ce qu'une butée (28) destinée à soulever le couvercle (24) du dispositif (25) d'étanchéité d'appui de couvercle est disposée sur l'arbre (11) de cartouche de filtre selon un écartement tel par rapport au couvercle (24) que, lorsque l'on abaisse l'arbre (11) de cartouche de filtre, le dispositif (25) d'étanchéité de couvercle se ferme tout d'abord, suivi du dispositif (22) d'étanchéité de fond.

4. Filtre pour liquides selon l'une quelconque des revendications 1 à 3, caractérisé en ce que l'arbre (11) de cartouche de filtre porte un canal axial (5) destiné à évacuer le liquide filtré.

5. Filtre pour liquides selon la revendication 4, caractérisé en ce qu'au moins dans son secteur inférieur, l'arbre (11) de cartouche de filtre est conformé comme une tubulure, qui est en liaison avec le canal axial (5) et en ce que l'arbre (11) de cartouche de filtre se termine par un dispositif (19) d'étanchéité d'appui d'arbre, qui, lorsque l'arbre (11) de cartouche de filtre est abaissé, se ferme de manière étanche par rapport à une goulotte d'évacuation stationnaire (17), qui dans cette position de service se raccorde à l'arbre (11) de cartouche de filtre.

6. Filtre pour liquides selon la revendication 4, caractérisé en ce que lorsque l'arbre (11) de cartouche de filtre est abaissé, le canal axial (5), par l'intermédiaire d'un percement axial (41) dans la plaque de fond (7), est en liaison avec un creuset annulaire (50) entourant l'arbre (11) de cartouche de filtre, dont les bords orientés vers la plaque de fond (7) reposent de manière étanche par l'intermédiaire de dispositif s (51, 52) d'étanchéité d'appui de parois, sur la plaque de fond (7), lorsque l'arbre (11) de cartouche de filtre est abaissé.

7. Filtre pour liquides, selon la revendication 4, caractérisé en ce qu'en-dessous de la plaque de fond (7) une plaque de fermeture (40) est fixée à l'arbre (11) de cartouche de filtre, à distance et parallèlement à celui-ci, dont le bord également repose sur la partie inférieure de paroi (20) du réservoir sous pression (1) par l'intermédiaire d'un autre dispositif (42) d'étanchéité d'appui de fermeture et qui entoure un espace en forme de disque en liaison avec le canal axial (5), ledit espace servant à évacuer le liquide filtré par la partie inférieure de paroi (20) du réservoir sous pression (1), lorsque la plaque de fond (7) et la plaque de fermeture (40) sont en appui.
